# EUROPEAN PATENT APPLICATION

(11) **EP 1 612 774 A2**
(43) Date of publication of application: **04.01.2006**
(21) Application number: 05104762.9
(22) Date of filing: 01.06.2005
(51) Int. Cl.: G11B 5/10

(54) **Head drum and method of assembling a head drum**

(30) Priority: 28.06.2004 KR 2004048811
(71) Applicant: SAMSUNG ELECTRONICS CO., LTD., Suwon-si, Gyeonggi-do 442-742 (KR)
(72) Inventor: Baik, Chung-hum, 106-1102,Dongsuwon LG Village, Gyeonggi-do (KR); Park, Byeng-bae, Gyeonggi-do (KR); Kim, Myoung-joon,2-201,Green Villa,44-10, Gyeonggi-do (KR); Oh, Jeong-hyeob,309-1005,Chowon-maeul Daewon Apt., Anyang-si,Gyeonggi-do, (KR); Lee, Seung-woo,542-106,Sinnamusil Ssangyong Apt., Suwon-si,Gyeonggi-do, (KR); Choi, Hyeong-seok, 250-1404,Hwanggol-maeul, Yeongtong-gu,Suwon-si,Gyeonggi-do (KR); Sim, Jae-hoon, 102-1008, Dongsuwon LG Village, Suwon-si, Gyeonggi-do, (KR)
(74) Representative: Geary, Stuart Lloyd

(57) **Abstract**

A method for assembling a head-drum assembly for a magnetic recording/reproducing apparatus is provided. The head-drum assembly is assembled by inserting a shaft to a fixed drum first, setting up a motor stator in the fixed drum, and putting a rotary drum assembly and drum cover assembly into the shaft sequentially. The method can reduce the number of part to be abandoned due to a defect caused in the assembly process by performing a process of assembling the shaft and the fixed drum first, an area in which most defects are caused, and then proceeding to the subsequent assembly processes.

## Description

The present invention relates to a head drum comprising a shaft and a rotary head-carrying part mounted to the shaft by a bearing which comprises an outer race and to a method of assembling a head drum comprising mounting a rotary head-carrying part and a fixed drum part to a shaft with the fixed drum part being located on the deck side of the rotary head-carrying part.

Magnetic tape camcorders generally employ a tape deck that includes a rotary head drum for recording and playback.

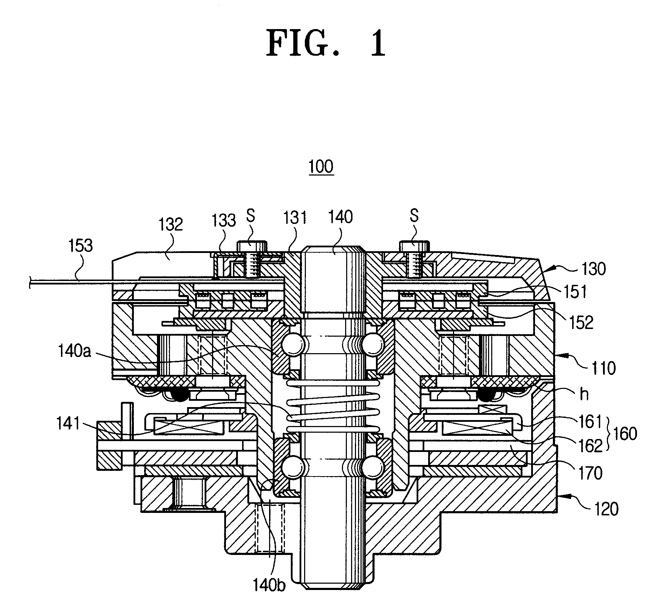

Figure 1 is a cross-sectional view illustrating a head drum assembly which is set up in a deck of a compact camcorder.

As shown in Figure 1, the head drum assembly 100 comprises a rotary drum 110, a fixed drum 120 and a drum cover 130.

The rotary drum 110 is mounted on a shaft 140 for rotation and supports magnetic heads (h) for recording and playing back video data by scanning a magnetic tape (not shown) that runs around the rotary drum 110.

The fixed drum 120 and the drum cover 130 are press-fitted onto the shaft 140 at lower and upper positions respectively, with the rotary drum 110 placed therebetween.

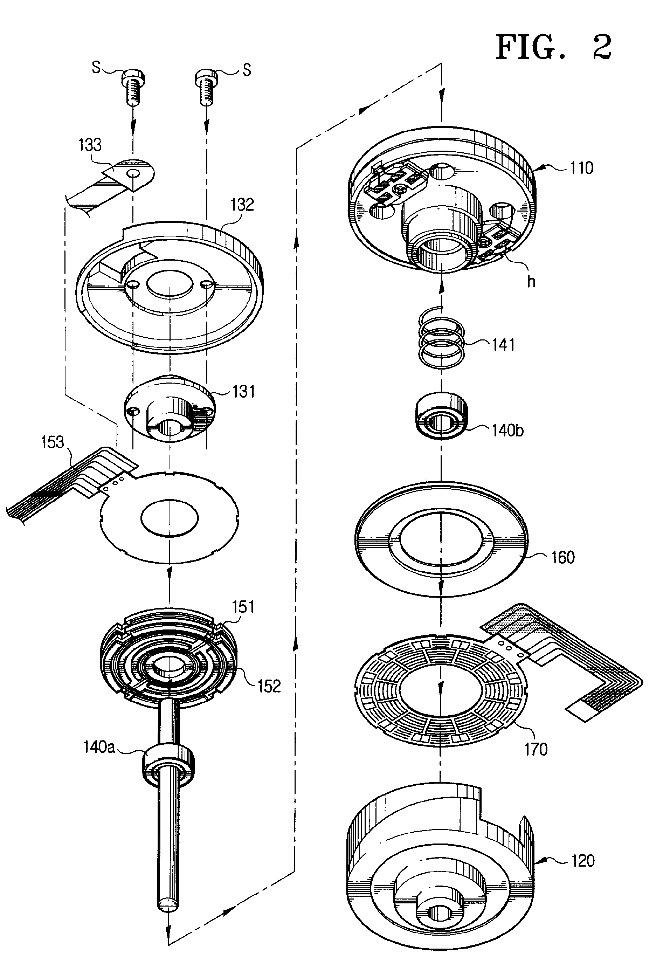

The drum cover 130 is disposed above the rotary drum 110, as shown in Figure 2. The drum cover 130 includes a conductive bush unit 131, a cover unit 132 and a grounding plate 133.

The bush unit 131 has an annular part into which the shaft 140 is press-fitted. The cover unit 132 is formed using a resin molding method and is connected with the bush unit 131 by a pair of screws S. The grounding plate 133 is attached by one of the screws (S), exposed on the top surface of the cover unit 132, and it is electrically connected to a sub-circuit substrate 153.

A rotary transformer 151, 152 is formed between the rotary drum 110 and the drum cover 130 to transfer signals between the magnetic heads (h) and the sub-circuit substrate 153.

A motor rotor 160, including a doughnut-shaped magnet 162 in an annular rotor case 161, is disposed on the bottom surface of the rotary drum 110, and a motor stator 170 is disposed on the top surface of the fixed drum 120. The motor stator 170 is fabricated by forming a three-layer fine pattern (FP) coil in a disc shape and placing the disc in close proximity to the doughnut-shaped magnet 162. Reference numerals '140a' and '140b' denote upper and lower bearings respectively and reference numeral '141' denotes a preload spring.

The conventional head drum assembly 100, with the above-described structure, is assembled by putting together the shaft 140 and the rotary drum 110 first, inserting the rotary drum 110 with the shaft 140 into the fixed drum 120 and then putting the drum cover 130 on top of the rotary drum 110. More specifically, the shaft 140 is press-fitted into the upper bearing 140a and the upper bearings 140a, together with the shaft 140, is housed by a bearing housing formed in the upper part of the rotary drum 110. Then, the preload spring 141 and the lower bearing 140b are installed inside the rotary drum 110, as shown in Figures 1 and 2. After the shaft 140 and the rotary drum 110 are assembled together, the magnetic heads (h) and the motor rotor 160 are set up on the bottom surface of the rotary drum 110 sequentially and the one winding 152 of the rotary transformer is placed on the top surface.

Subsequently, the fixed drum 120 is assembled with the rotary drum 110, which has the shaft 140 press-fitted, by mounting the motor stator 170 at a position in confrontation with the motor rotor 160. The rotary drum 110 and the fixed drum 120 are assembled by forcedly fitting the shaft 140 to the rotary drum 110 and the fixed drum 120. Then, the drum cover 130 is joined with the bush member 131 in the upper part of the rotary drum 110 assembled with the fixed drum 120.

However, the process of inserting the shaft 140 to the fixed drum 120 is generally performed using a cold pressure insertion, which causes a high defect rate. Once a defect is caused during the insertion process, all the parts set up in the rotary drum 110 and the fixed drum 120 should be abandoned. Therefore, the economic loss due to the abandonment of defective parts is huge, and some improvement is required.

A head drum, according to the present invention, is characterised in that the bearing includes an inner race.

A method of assembling a head drum, according to the present invention, comprising installing the or each bearing in the rotary head-carrying part and then inserting the shaft through the or each bearing.

A method, according to the present invention, is characterised in that the fixed drum part is mounted to the shaft before the rotary head-carrying part.

Preferred and optional features of the present invention are set forth in claims 1 to 12, 14, 15 and 16 appended hereto.

An embodiment of the present invention will now be described, by way of example, with reference to Figures 3 to 4C of the accompanying drawings, in which:
Figure 1 is a cross-sectional view illustrating a conventional head drum assembly;
Figure 2 is an exploded perspective view illustrating the head drum assembly of Figure 1;
Figure 3 is a cross-sectional view illustrating a head drum assembly in accordance with the present invention; and
Figures 4A to 4C are cross-sectional views illustrating the assembling of the head drum assembly shown in Figure 3.

Well-known functions or constructions will not be described in detail in the interests of conciseness and clarity.

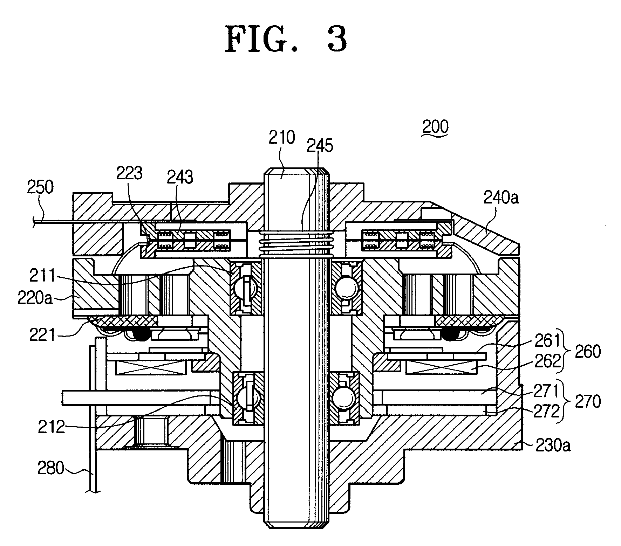

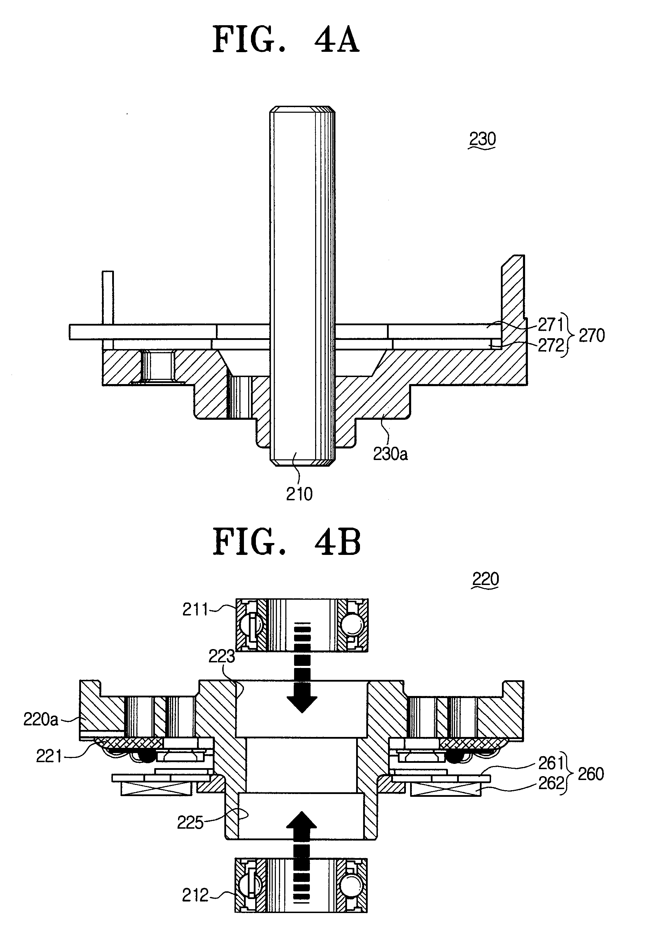

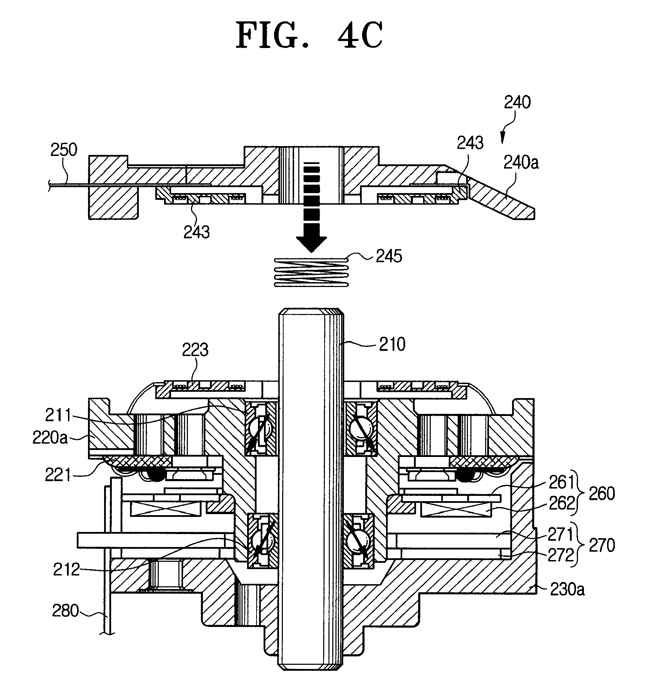

Referring to Figures 3 to 4C, the head drum assembly 200 comprises a shaft 210, a rotary drum assembly 220 (see Figure 4B), a fixed drum assembly 230 (see Figure 4A) and a drum cover assembly 240 (see Figure 4C).

The shaft 210 supports the rotary drum assembly 220, the fixed drum assembly 230 and the drum cover assembly 240 by being at the centre of rotation of the rotary drum assembly 220, the fixed drum assembly 230 and the drum cover assembly 240.

The rotary drum assembly 220 includes a rotary drum 220a, a magnetic heads 221, a first rotary transformer winding 223 and a motor rotor 260.

The rotary drum 220a is rotatably mounted by upper and lower bearings 211, 212 on the shaft 210. It is preferred that the upper and lower bearings 211, 212 have the same internal diameter.

The magnetic heads 221 playback video data by scanning a magnetic tape (not shown). The magnetic heads 221 are connected to the first rotary transformer winding 223.

The first rotary transformer winding 223 cooperates with a second rotary transformer winding 243, mounted on the underside of the drum cover assembly 240, to transmit signals between the magnetic heads 221 and a sub-circuit substrate 250.

The motor rotor 260 includes an annular rotor case 261 and a magnet 262. The annular rotor 261 is planar and is fabricated without requiring a bending process. The magnet 262 is formed in the shape of a doughnut and bonded to the underside of the annular rotor 261.

The fixed drum assembly 230 includes a fixed drum 230a and a motor stator 270. The fixed drum 230a is positioned under the rotary drum 220a. The motor stator 270 is mounted on the top surface of the fixed drum 230a and includes a fine pattern (FP) coil 271 and a yoke 272.

The FP coil 271 is formed in the shape of a disc, has two layers and is proximal to the doughnut-shaped magnet 262. The yoke 272 is set up to prevent losses due to eddy currents in the bottom surface of the FP coil 271. Preferably, the yoke 272 comprises a silicon steel plate.

If the yoke 272 comprises a silicon steel plate, the material cost can be reduced while the same performance is achieved, compared with a conventional ferrite yoke. In Figures 3 to 4C, reference numeral '280' denotes a motor FPC (flexible printed circuit) that conveys a control signal to the motor stator 270.

The drum cover assembly 240 includes a drum cover 240a, a second rotary transformer winding 243 and a sub-circuit substrate 250.

As shown in Figure 3, the drum cover 240a is positioned in and connected with the upper part of the rotary drum 220a by the shaft 210 press-fitted thereto. The sub-circuit substrate 250 on the inside of the drum cover 240a is connected to the second rotary transformer winding 243. Additionally, since the sub-circuit substrate 250 has a ground line positioned therein, it does not require an additional ground screw.

A method of assembling the above head drum assembly will now be described with reference to Figures 4A to 4C.

The first step of the head drum assembly assembling method is to insert the shaft 210 to the fixed drum 230a using a cold pressure insertion method, which is illustrated in Figure 4A. If a defect is caused during the process of inserting the shaft 210 to the fixed drum 230a, the parts of the defect are abandoned. Only when the shaft 210 is connected with the fixed drum 230a correctly, is the motor stator 270 positioned in the fixed drum 230a to form the fixed drum assembly. The yoke 272 is bonded to the fixed drum 230a and then the FP coil 271 is bonded to the top surface of the yoke 272.

Subsequently, as shown in Figure 4B, the rotary drum assembly 220 is assembled. The upper and lower bearings 211, 212 are press-fitted into the bearing housings 223, 225, formed in upper and lower parts of the rotary drum 220a, and the magnetic heads 221 are provided at the correct positions. Then, the first rotary transformer winding 223 is installed in the upper part of the rotary drum 220a, and connected with the magnetic heads 221, and the motor rotor 260 is positioned in proximity to the motor stator 270 in the lower part of the rotary drum 220a.

Subsequently, as illustrated in Figure 4C, the fixed drum 230a, with the shaft 210 press-fitted thereto, is connected to the rotary drum 220a, which is prepared as shown in Figure 4B. The shaft 210 is inserted onto the upper and lower bearings 211, 212 formed in the rotary drum 220a using the cold pressure insertion method.

As shown in Figure 4C, the drum cover assembly 240 is installed above the rotary drum 220a, already united with the fixed drum 230a. In the process of uniting the rotary drum assembly 220 with the fixed drum assembly 230, pressure is applied to the inner hubs of the upper and lower bearings 211, 212 as the shaft 210 is press-fitted. Due to the pressure, caused by the insertion of the shaft 210, the inner and outer hubs of the bearings may deviate. In order to prevent this deviation, the preload spring 245 is inserted between the rotary drum 220a and the drum cover 240a. The preload spring 245 presses the inner hub in the direction of the arrow which is illustrated in Figure 4C to thereby arrange the inner and outer hubs of the upper and lower bearings 211, 212.

As described above, if the shaft 210 is inserted onto the fixed drum 230a without the motor stator 270 having been installed and, if a defect is caused during the shaft insertion, only the shaft 210 and the fixed drum 230a need be abandoned. Therefore, the number of parts that need to be abandoned is reduced, compared to conventional head drum assembly methods.

In accordance with the embodiment of the present invention which is described above, the number of parts that are abandoned due to a defect caused in the process of assembling the shaft and the fixed drum is reduced. Therefore, less parts are wasted and the assembling cost can be reduced.

## Claims

1. A method for assembling a head-drum assembly which includes a fixed drum assembly, a rotary drum assembly, and a shaft for supporting the rotary drum assembly to be rotatable with respect to the fixed drum assembly and used for a magnetic recording/reproducing apparatus, comprising the steps of:
assembling the fixed drum assembly with the shaft by press-fitting the shaft; and
assembling the shaft with the rotary drum assembly by inserting bearings.

2. The method as recited in claim 1, wherein the fixed drum assembly comprises a fixed drum, a yoke which comprises a silicon steel plate set up in the fixed drum, and a two-layer fine pattern (FP) coil which is set up in the yoke and forms a motor stator.

3. The method as recited in claim 2, wherein the rotary drum assembly comprises a rotary drum, upper and lower bearings press-fitted into the inner circumference of the rotary drum, a magnetic head, a rotation transformer which is connected with the magnetic head and set up in the top surface of the rotary drum, and a motor rotor which is formed proximal to the motor stator in the lower part of the rotary drum.

4. The method as recited in claim 3, wherein the motor rotor comprises: a rotor case fixed to the rotary drum; and a magnet fixed to the rotor case..

5. The method as recited in claim 4, wherein the rotor case is a plane having a ring shape.

6. A method for assembling a head-drum assembly for a magnetic recording/reproducing apparatus, comprising the steps of:
assembling a fixed drum assembly and a rotary drum assembly;
assembling a shaft with the fixed drum assembly;
assembling the rotary drum assembly with the shaft to be rotatable; and
assembling a drum cover assembly with the shaft protruding from the upper part of the rotary drum assembly.

7. The method as recited in claim 6, wherein, in the step of assembling the fixed drum assembly, the shaft is press-fitted into a fixed drum and a fine pattern (FP) coil which comprises two layers and forms a yoke.

8. The method as recited in claim 7, wherein a motor stator is bonded to the fixed drum.

9. The method as recited in claim 6, wherein the step of assembling the rotary drum assembly comprises the steps of:
preparing a rotary drum;
inserting upper and lower bearings to the inner circumference of the rotary drum;
setting up a magnetic head in the rotary drum; and
setting up a first rotation transformer in the rotary drum and connecting the first rotary transformer set up in the rotary drum with the magnetic head; and
setting up a motor rotor in the rotary drum.

10. The method as recited in claim 9, wherein the motor rotor includes an annular rotor case having a plane structure, a magnet installed in the rotor case..

11. The method as recited in claim 10, wherein the rotor case is bonded to the rotary drum while the magnet is bonded to the rotor case.

12. The method as recited in claim 9, wherein the drum cover assembly comprises a drum cover, a second rotation transformer in contact with the first rotation transformer, and a sub-circuit substrate, and the drum cover assembly is press-fitted into the shaft with a preload spring inserted between the upper bearing and the drum cover assembly.

13. A head drum comprising a shaft (210) and a rotary head-carrying part (220) mounted to the shaft (210) by a bearing (211) which comprises an outer race, **characterised in that** the bearing (211) includes an inner race.

14. A head drum according to claim 13, wherein the rotary head-carrying part (220) is mounted to the shaft (210) by a plurality of bearings (211, 212), each of which comprises outer and inner races.

15. A method of assembling a head drum according to claim 13 or 14, comprising installing the or each bearing (211, 212) in the rotary head-carrying part (220) and then inserting the shaft (210) through the or each bearing (211, 212).

16. A method according to claim 15, including mounting a fixed drum part (230) to the shaft (210) before inserting the shaft (210) through the or each bearing (211, 212) of the rotary head-carrying part (220).

17. A method of assembling a head drum comprising mounting a rotary head-carrying part (220) and a fixed drum part (230) to a shaft (210) with the fixed drum part (230) being located on the deck side of the rotary head-carrying part (220), **characterised in that** the fixed drum part (230) is mounted to the shaft (210) before the rotary head-carrying part (220).
